# EUROPÄISCHE PATENTSCHRIFT

(11) **EP 3 556 452 B1**
(45) Veröffentlichungstag und Bekanntmachung des Hinweises auf die Patenterteilung: **31.03.2021**
(21) Anmeldenummer: 19156841.9
(22) Anmeldetag: 13.02.2019
(51) Int. Cl.: B01D 53/18, B01D 3/26, B01D 47/06

(54) **ANLAGE ZUR ABSORPTION VON EINZELKOMPONENTEN IN GASEN**
DEVICE FOR THE ABSORPTION OF INDIVIDUAL COMPONENTS IN GASES
INSTALLATION D'ABSORPTION DE COMPOSANTS INDIVIDUELS DANS LES GAZ

(30) Priorität: 19.04.2018 AT 503302018
(43) Veröffentlichungstag der Anmeldung: 23.10.2019
(73) Patentinhaber: Andritz AG, 8045 Graz (AT)
(72) Erfinder: KOLLER, Martin, 8052 Graz (AT); GURKER, Thomas, 8010 Graz (AT); DUNKL, Bernhard, 8020 Graz (AT)
(74) Vertreter: Tschinder, Thomas

(56) Entgegenhaltungen:
- EP-A1- 3 260 187
- AT-U1- 14 588
- CN-A- 106 512 641
- GB-A- 120 304
- US-A- 3 633 882

## Beschreibung

Den Gegenstand dieser Erfindung bildet eine Anlage zur Absorption von Einzelkomponenten (z.B. Schadstoffe oder Wertstoffe) in Gasen, bei der eine Absorptionslösung in einem Absorptionsraum mit dem Gas in Kontakt gebracht wird. Die Absorptionslösung wird dabei über Sprühdüsen in den Absorptionsraum eingebracht. Das Gas wird über einen vertikalen Eintrittskanal von unten dem Absorptionsraum zugeführt, wobei der Eintrittskanal eine Öffnung aufweist, die durch einen beabstandeten Dachaufsatz abgedeckt ist. Der Grundriss des Dachaufsatzes ist dabei größer, als der Grundriss der Einlassöffnung, sodass die Absorptionslösung nicht in die Einlassöffnung tropfen kann.

Bei vielen industriellen Prozessen, insbesondere bei Verbrennungsprozessen, entstehen Abgase bzw. Abluft, welche saure Komponenten wie Schwefeldioxid (SO2), Salzsäure (HCl), Fluorwasserstoff (HF) und/oder Stickoxide (NO, NO2) enthalten, die aufgrund ihrer Schädlichkeit für das Ökosystem als Schadstoffe bezeichnet werden oder auch Wertstoffe, wie z.B. Metalloxide, die durch den Behandlungsprozess in einen gasförmigen Zustand versetzt werden.

Aus dem Stand der Technik sind bereits verschiedene Technologien zur sogenannten nassen Abgas- und Rauchgasbehandlung bekannt, bei denen der Absorptionsraum als Sprühturm in Form einer Tropfensäule ausgeführt ist. Es gibt stationäre Anlagen, die hauptsächlich für die Rauchgasreinigung von Kraftwerken verwendet werden, es sind aber auch mobile Anlagen bekannt, die die Abgase eines Verbrennungsmotors reinigen.

Der derzeitige Stand der Technik von mobilen Abgasreinigungsanlagen, beispielsweise für Schiffe, leitet sich technologisch von stationären Anlagen ab. Dabei wird das Abgas entweder durch eine seitliche Öffnung dem Wäscher (Absorptionsraum) zugeführt oder es wird von unten in den Wäscher eingeleitet. Die Abschirmung gegen die dispergierte Waschflüssigkeit (Absorptionslösung) erfolgt durch ein einzelnes, auf den Eintrittskanal aufgesetztes Schutzdach (Chinesenhut). Aus der GB 120 304 A ist auch ein aus mehreren Lamellen bestehendes Schutzdach bekannt.

Der seitliche Gaseintritt bei mobilen Anlagen stellt die direkte technische Umlegung der stationären Bauart dar und gilt als technisch unbedenkliche Lösung, da durch Hochziehen der Kanalführung und Konstruktion eines künstlichen Gefälles in Richtung Wäscher die Gefahr eines Durchtritts der Waschflüssigkeit in den Abgastrakt weitgehend verhindert werden kann. Im Gegensatz zur stationären Lösung sind dabei jedoch größere Sicherheitsreserven einzuplanen, da Schwallströmungen (z.B. durch Krängung eines Schiffes) berücksichtigt werden müssen. Ein Nachteil des seitlichen Rauchgaseintritts ist der sich ergebende große Platzbedarf für die seitliche Einbringung des Abgases in den Wäscher. Der Zuführkanal wird von der vertikalen Achse über einen großzügigen Umlenkbogen in ein horizontales Kanalstück überführt, dabei wird die Unterseite des Kanals mit einem deutlichen Gefälle oder einem Wehr ausgestattet, um den oben genannten Flüssigkeitseintrag zu verhindern. Da die Einbringung des Abgases im unteren Teil des Wäschers erfolgt, kommt es je nach Bauart etwa zu einer Verdoppelung der Aufstellungsfläche des Wäschers.

Die vertikale Gaszufuhr in den Wäscher mit einfachem Dachaufsatz (Chinesenhut) stellt zwar eine baulich attraktive Alternative zum seitlichen Eintritt dar, allerdings ist im Allgemeinen eine vollständige Absicherung gegen den Durchtritt der Waschflüssigkeit in den Abgastrakt nicht gegeben und risikolos nur in Spezialfällen einsetzbar. In der Praxis wird der Druckverlust durch den Einsatz des einfachen Dachaufsatzes stark erhöht, weil die Gasströmung durch den Dachaufsatz eine zweifache Umlenkung erfährt und dabei die Dachflanken in einem engen Radius umstreichen muss. Diese Einschnürung bewirkt, dass nur ein geringer Teil der zur Verfügung stehenden freien Durchtrittsfläche genutzt wird. Der restliche Kanalquerschnitt wird zum Teil entweder nur unzureichend durchströmt oder es bildet sich eine Rezirkulationszone. Letztere wirkt sich auf die örtlichen Druckverhältnisse so aus, dass Teile des freien Querschnitts in Gegenrichtung durchströmt werden. Dadurch besteht das Risiko, dass Tropfen in den Abgasstrang mitgerissen werden. Die damit einhergehende Erhöhung des Druckverlustes bewirkt, dass die Anforderungen der Gesamtanlage nicht erfüllt werden können oder dass der wirtschaftliche Betrieb der Anlage signifikant verschlechtert wird.

Ziel der Erfindung ist es, eine Rauchgas- bzw. Abgasreinigungsanlage zur Verfügung zu stellen, die eine möglichst kleine Aufstellfläche benötigt, bei der der auftretende Druckverlust minimiert wird und bei der ein Tropfendurchtritt der Absorptionslösung in den Rauchgas- bzw. Abgasstrang weitgehend ausgeschlossen wird.

Gelöst wird diese Aufgabe durch eine Anlage gemäß Patentanspruch 1. Durch den vertikalen Gaseintritt lässt sich die notwendige Aufstellfläche der Reinigungsanlage minimieren und durch den erfindungsgemäßen Dachaufsatz, der aus einer Vielzahl übereinander angeordneter und voneinander beabstandeter Lamellen aufgebaut ist, wird der auftretende Druckverlust gering gehalten. Durch die Wahl eines vertikalen anstatt eines seitlichen Wäschereintritts kann der benötigte Platzbedarf auf etwa die Hälfte reduziert werden. Speziell bei mobilen Anlagen, wie beim Einsatz auf Schiffen, stellt dies einen Vorteil bei der Planung dar. Noch deutlichere Vorteile ergeben sich bei der Nachrüstung in existierende Abgassysteme, da sich das kompakte System problemlos in die vorhandene Struktur einbinden lässt.

Erfindungsgemäß sind die Lamellen in ihrem Anfangsbereich bogenförmig in Richtung Gaseinlass gekrümmt, da dadurch die Gasumlenkung unterstützt und der Druckverlust weiter gesenkt wird. Beziehungsweise verlaufen erfindungsgemäß die Lamellen zuerst vertikal nach oben, werden dann bogenförmig umgelenkt und verlaufen schließlich schräg nach unten. Dadurch wird ebenfalls eine sehr gute Gasumlenkung gewährleistet.

Die erfindungsgemäße Anlage eignet sich besonders zur Reinigung von Schiffsabgasen. Dabei werden die Schadstoffe aus den Abgasen mit Hilfe von Meerwasser, gegebenenfalls durch Zugabe von Natronlauge oder Natriumkarbonat, entfernt.

Vorzugsweise verlaufen die Lamellen zur Wand des Absorptionsraums hin schräg nach unten. Idealerweise mit einem Neigungswinkel α von 50° bis 70°, vorzugsweise mit 60°. Dieser Bereich ergibt den optimalen Kompromiss zwischen einem ausreichenden Schutz gegen einen Flüssigkeitseintritt in den Eintrittskanal und einer möglichst geringen Gasumlenkung zur Reduktion des Druckverlustes.

Es ist sinnvoll, wenn die Länge der Kanäle zwischen den Lamellen größer ist, als der Abstand der die Kanäle bildenden Lamellen. Auch dadurch wird ein Flüssigkeitseintritt in den Eintrittskanal verhindert.

Der Dachaufsatz kann beispielsweise pyramidenförmigen oder kegelförmigen ausgebildet sein.

In einer bevorzugten Ausführungsform ist oberhalb des Dachaufsatzes eine Gasverteilungsebene angeordnet.

Durch diese Gasverteilungsebene wird das zugeführte Gas einerseits vergleichmäßigt und andererseits wird dadurch ein hochturbulentes Suspensionsregime (Flüssigkeitsschicht) erzeugt. Die Gasverteilungsebene kann beispielsweise aus einer Vielzahl von miteinander verbundenen Rohren bestehen.

Im Folgenden wird die Erfindung anhand von Zeichnungen beschrieben. Es zeigen:
Fig. 1 eine beispielhafte Ausführung der erfindungsgemäßen Anlage;
Fig. 2 eine Seitenansicht eines erfindungsgemäßen Dachaufsatzes;
Fig. 3 eine Draufsicht auf den Dachaufsatz aus Figur 2;
Fig. 4 eine Schnittansicht entlang der Linie A-A aus Figur 3;
Fig. 5 eine weitere Schnittansicht entlang der Linie B-B aus Figur 3;
Fig. 6 eine Detailansicht des Dachaufsatzes gemäß Figur 5;
Fig. 7 eine schematische Darstellung des Dachaufsatzes;
Fig. 8 eine weitere Ausführungsform des erfindungsgemäßen Dachaufsatzes;
Fig.9 eine Schnittansicht durch Figur 8;

Gleiche Bezugszeichen in den einzelnen Figuren bezeichnen jeweils gleiche Anlagenteile.

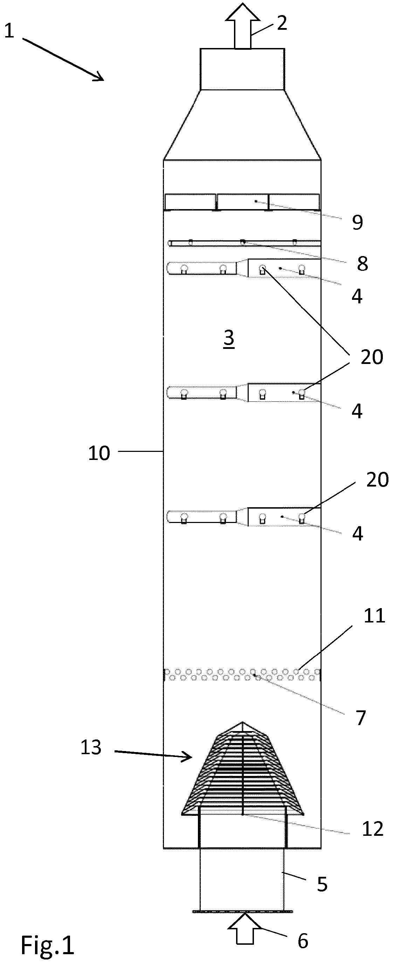

Fig. 1 zeigt einen Querschnitt durch eine erfindungsgemäße Abgasreinigungsanlage 1. Dabei strömt das Abgas in vertikaler Richtung 6 über den Eintrittskanal 5 von unten in den vorzugsweise quaderförmigen Absorptionsraum 3 ein, der durch die Behälterwand 10 begrenzt wird. Gegenüber Anlagen mit seitlichem Eintritt ergibt sich so eine Verkleinerung der Aufstellungsfläche ("footprint") der Abgasreinigungsanlage, welche in hohem Maße von der Gestaltung des Wäschereintritts abhängt.
Das Abgas durchströmt den Absorptionsraum 3 von unten nach oben und verlässt diesen durch den Gasaustritt 2.

Die Öffnung 12 des Eintrittskanals 5 wird durch einen pyramidenförmigen Dachaufsatz 13 mit quadratischer Grundfläche bedeckt. Direkt oberhalb des Dachaufsatzes 13 befindet sich die Gasverteilungsebene 7, die aus einer Vielzahl von einzelnen Rohren 11 besteht. Durch die Gasverteilungsebene 7 wird das Abgas innerhalb des Absorptionsraumes 3 gleichmäßiger verteilt und außerdem werden dadurch im Rauchgas Turbulenzen induziert, die zu einer intensiveren Vermischung des Gases mit der Absorptionslösung führen.

Die Absorptionslösung wird über Sprühdüsen 20 der Sprühebenen 4 in den Absorptionsraum 3 eingebracht und tritt in Tropfenform mit dem Abgas in Kontakt. Der Dachaufsatz 13 verhindert, dass die Absorptionslösung in den Eintrittskanal 5 und somit in den Abgastrakt gelangt. Oberhalb der Sprühebenen 4 sind eine Spüleinrichtung 8 und ein Tropfenabscheider 9 vorgesehen.

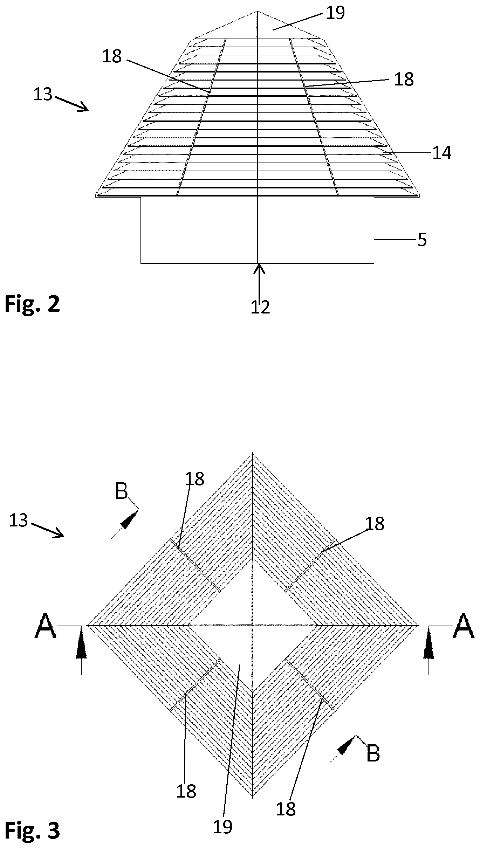

In Figur 2 ist der Dachaufsatz 13 in einer Seitenansicht dargestellt. Er besteht aus einer Vielzahl übereinander angeordneter Lamellen 14, die voneinander beabstandet sind, sodass das Abgas durch die zwischen den Lamellen 14 gebildeten Kanäle 15 in den Absorptionsraum 3 gelangt. Die zunächst vertikal verlaufende Gasströmung wird im Verteilerraum innerhalb des Dachaufsatzes 13 so in Richtung der Lamellen 14 umgelenkt, dass die Durchtrittsflächen gleichmäßig belastet werden. Die Flanken des Dachaufsatzes 13 sind hier nach oben hin verjüngend ausgebildet und treffen sich in einem Punkt bzw. in einem flächenmäßig kleinen, obenliegenden Hilfsdach 19.
Primäres Ziel dieser Anordnung ist die Maximierung bzw. Optimierung der Durchtrittsfläche für das einströmende Ab- bzw. Rauchgas in den Absorptionsraum 3.
Sekundäres Ziel dieser Anordnung gegenüber vertikal angeordneten Dachflanken ist, dass der sich nach oben verjüngende Dachaufsatz 13 zusätzlichen Raum für die Durchströmung zur Verfügung stellt. Durch die Vergrößerung der frei durchströmbaren Fläche wird das Ab- bzw. Rauchgas direkt nach dem Austritt aus den Lamellen 14 abgebremst und rasch nach oben hin umgelenkt. Im Gegensatz zur Umlenkung mit Chinesenhut, bei der die Strömung ungleichverteilt in Form von Strähnen nach oben steigt, steigt hier das Ab- bzw. Rauchgas im Sinne einer Pfropfenströmung ungehindert nach oben auf.

In Figur 3 ist eine Draufsicht des Dachaufsatzes 13 dargestellt. Man erkennt hier die Streben 18, die die einzelnen Lamellen 14 an ihren äußeren Enden verbinden, dadurch wird ein Flattern der Lamellen 14 verhindert.

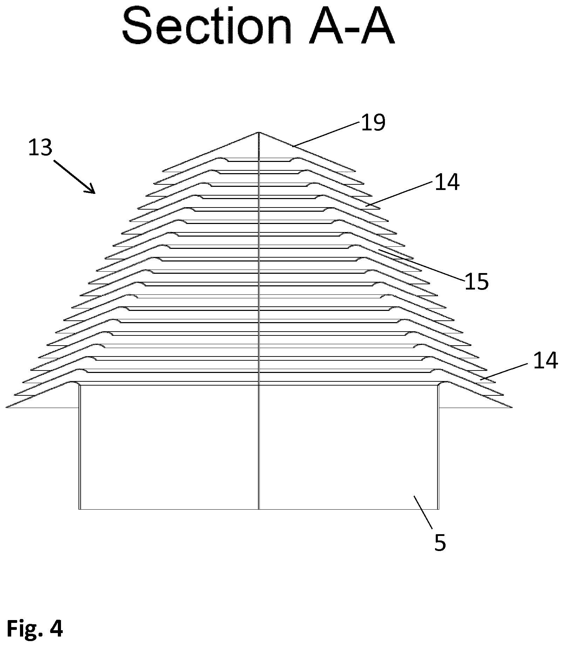

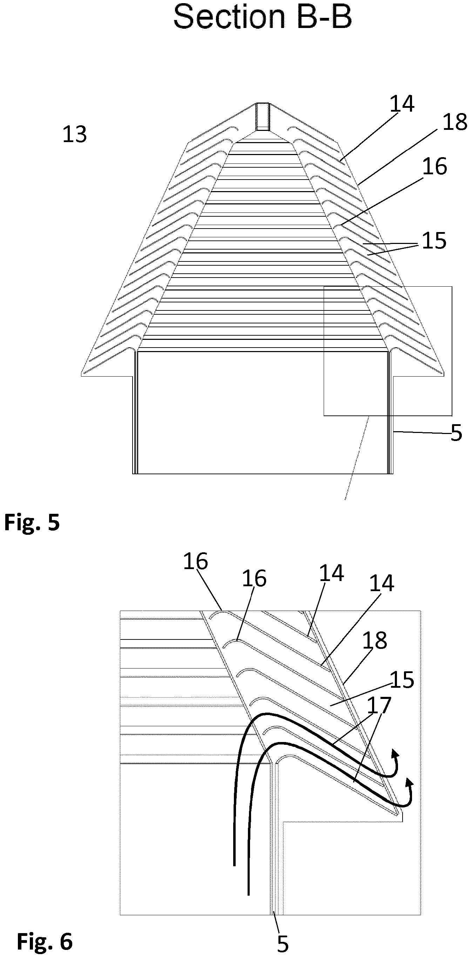

In den Figuren 4 und 5 sind jeweils Schnitte entlang der Linien A-A bzw. B-B (siehe Figur 3) dargestellt.

Figur 6 zeigt eine Detailansicht des Dachaufsatzes 13 aus Figur 5. Die Lamellen 14 haben hier einen bogenförmig gekrümmten Anfangsbereich 16 in Richtung Gaseintritt. Dadurch kann das Gas entlang der Umlenkung gleichmäßig zwischen die einzelnen Lamellen 14 einströmen und ein örtlicher Abriss bzw. eine Rezirkulation nach der Umlenkung wird verhindert. Die Gasströmung wird durch die beiden Pfeile 17 angedeutet. Diese optimierte Strömungsführung minimiert den Druckverlust signifikant gegenüber der Lösung mit Chinesenhut.

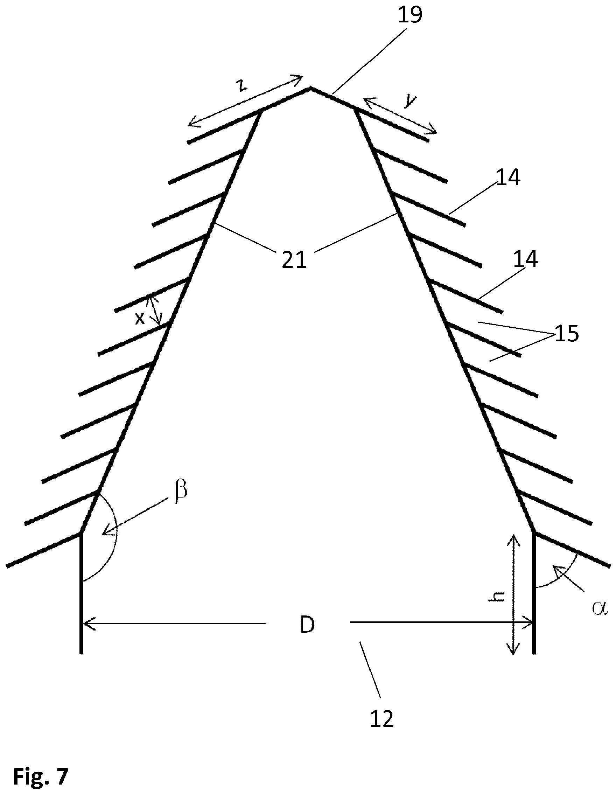

Figur 7 zeigt eine schematische Ansicht des Dachaufsatzes 13 zur Veranschaulichung einzelner Abmessungen und Winkel.

Untersuchungen haben gezeigt, dass es günstig ist, wenn das Verhältnis zwischen Querschnittsfläche des Eintrittskanals 5 und der Querschnittsfläche des Absorptionsraumes 3 (gemessen auf Höhe der Öffnung 12) zwischen 0,3 und 0,5 betragen sollte.
Die Seitenlänge des quadratischen Eintrittskanals 5 beträgt hier beispielsweise 1500 mm. Der Abstand h der untersten Lamelle 14 vom Wäscherboden beträgt hier 500 mm.

Die Länge y der Lamellen 14 und der Lamellenabstand x sind so gewählt, dass ein Tropfeneintritt entgegen der Ausströmrichtung verhindert wird.

Vorzugsweise beträgt die Länge y der Lamellen 14 zwischen 150 und 300 mm, wobei der Lamellenabstand x zwischen 40 und 60 mm, vorzugsweise 50 mm betragen sollte. Die Lamellen 14 des Hilfsdaches 19 haben hier eine Länge z von 290 mm.
Der Anstellwinkel α der einzelnen Lamellen 14 bezogen auf eine Vertikale sollte 50° bis 70°, vorzugsweise 60° betragen. Dieser Winkel α wurde in Hinblick auf den Druckverlust so gewählt, dass die erforderliche Umlenkung gegen die eigentliche Hauptströmungsrichtung auf ein Minimum reduziert wird.

Der Winkel β der Dachschräge 21 sollte bezogen auf eine Vertikale vorzugsweise im Bereich von 140° bis 170° liegen, insbesondere bei 155°.

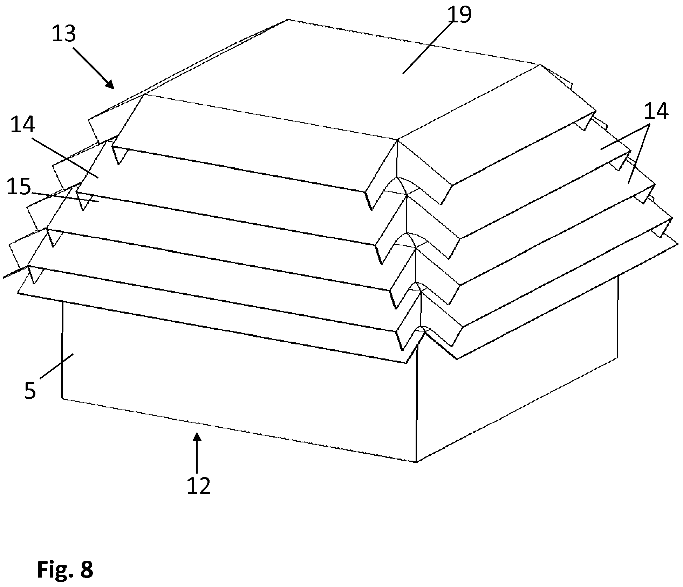

In Figur 8 ist eine weitere Ausführungsform des erfindungsgemäßen Dachaufsatzes 13 dargestellt. Dieser Dachaufsatz 13 hat einen quadratischen Grundriss und weist pro Seite fünf Lamellen 14 auf. Die Oberseite ist dabei durch ein flaches Hilfsdach 19 verschlossen.

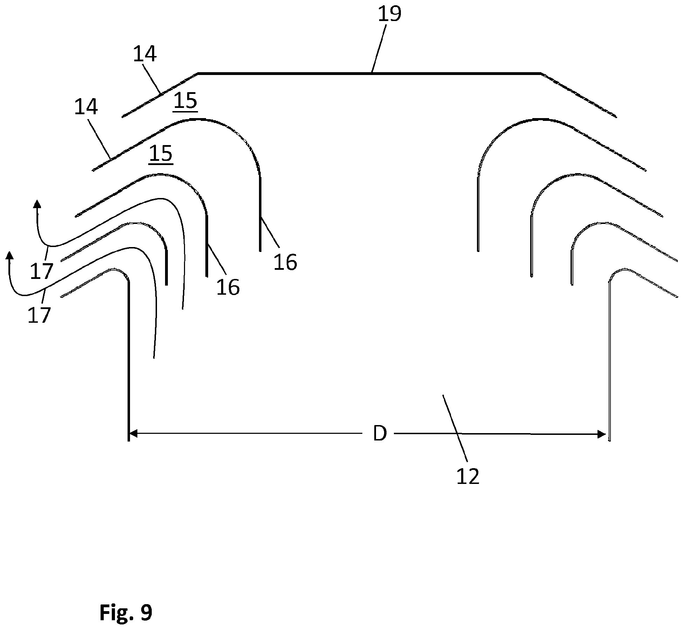

Figur 9 zeigt eine Schnittansicht durch den Dachaufsatz 13 aus Figur 8. Man erkennt dabei gut die Form der Lamellen 14. In Strömungsrichtung des Rauchgases betrachtet, weisen die Lamellen 14 einen vertikalen, geraden Anfangsbereich 16 auf. Daran schließt ein bogenförmiger Abschnitt an, der letztendlich in einen geraden, schräg nach unten verlaufenden Abschnitt übergeht. Durch diese Lamellenform wird das Rauchgas in den Kanälen 15 besonders sanft umgelenkt. Die Gasströmung 17 in den Kanälen 15 ist durch die beiden Pfeile angedeutet. Die obersten Lamellen 14, weisen keinen vertikalen bzw. bogenförmigen Abschnitt auf, da sie direkt mit dem Hilfsdach 19 verbunden sind.

Für einen stabilen Betrieb ist es günstig, wenn die Gasgeschwindigkeit im Eintrittskanal 5 14-18 m/s beträgt, da signifikant höhere oder niedrigere Strömungsgeschwindigkeiten zu einer mangelhaften Strömungsverteilung innerhalb des Dachaufsatzes 13 führen würden. Die Gasgeschwindigkeit in den Kanälen 15 sollte im Bereich von 7 bis 27 m/s liegen.

## Patentansprüche

1. Anlage (1) zur Absorption von Einzelkomponenten wie Schadstoffe oder Wertstoffe in Gasen, bei der eine Absorptionslösung in einem Absorptionsraum (3) mit dem Gas in Kontakt gebracht wird, wobei die Absorptionslösung über Sprühdüsen (20) einer Sprühebene (4) in den Absorptionsraum (3) eingebracht wird und das Gas über einen vertikalen Eintrittskanal (5) von unten dem Absorptionsraum (3) zuführbar ist, wobei der Eintrittskanal (5) eine Öffnung (12) aufweist, die durch einen Dachaufsatz (13) abgedeckt ist, wobei der Grundriss des Dachaufsatzes (13) größer ist, als der Grundriss der Einlassöffnung (12), sodass die Absorptionslösung nicht in die Einlassöffnung (12) fällt, wobei der Dachaufsatz (13) aus einer Vielzahl übereinander angeordneter und voneinander beabstandeter Lamellen (14) aufgebaut ist, wobei der Dachaufsatz (13) durch ein Hilfsdach (19) verschlossen ist, **dadurch gekennzeichnet, dass** die Lamellen (14) in ihrem Anfangsbereich (16) bogenförmig gekrümmt sind, oder dass die Lamellen (14) in ihrem Anfangsbereich (16) vertikal nach oben verlaufen und dann bogenförmig gekrümmt sind, sodass dadurch die Umlenkung des Gases unterstützt wird.

2. Anlage nach Anspruch 1, **dadurch gekennzeichnet, dass** die Lamellen (14) zur Behälterwand (10) des Absorptionsraums (3) hin schräg nach unten verlaufen, sodass das vertikal einströmende Gas schräg nach unten umgelenkt wird und durch die zwischen den Lamellen (14) gebildeten Kanäle (15) dem Absorptionsraum (3) zuführbar ist.

3. Anlage nach Anspruch 2, **dadurch gekennzeichnet, dass** der Winkel α zwischen den Lamellen (14) und der Vertikalen zwischen 50° und 70°, vorzugsweise 60°, beträgt.

4. Anlage nach Anspruch 2 oder 3, **dadurch gekennzeichnet, dass** die Länge (y) der Kanäle (15) zwischen zwei Lamellen (14) größer ist, als der Abstand (x) der die Kanäle (15) bildenden Lamellen (14).

5. Anlage nach einem der Ansprüche 1 bis 4, **dadurch gekennzeichnet, dass** die Steigung (β) der Dachflanke bezogen auf eine Vertikale zwischen 140° und 170°, vorzugsweise 155° beträgt.

6. Anlage nach einem der Ansprüche 1 bis 5, **dadurch gekennzeichnet, dass** die Lamellen (14) einen pyramidenförmigen Dachaufsatz (13) bilden.

7. Anlage nach einem der Ansprüche 1 bis 5, **dadurch gekennzeichnet, dass** die Lamellen (14) einen kegelförmigen Dachaufsatz (13) bilden.

8. Anlage nach einem der Ansprüche 1 bis 7, **dadurch gekennzeichnet, dass** oberhalb das Dachaufsatzes (13) eine Gasverteilungsebene (7) angeordnet ist, durch die Turbulenzen im zugeführten Gasstrom hervorgerufen werden.

## Claims

1. Plant (1) for the absorption of individual components, such as pollutants or recyclable materials, in gases, in which an absorption solution is brought into contact with the gas in an absorption chamber (3), where the absorption solution is fed into the absorption chamber (3) through spray nozzles (20) of a spraying level (4) and the gas can be fed into the absorption chamber (3) from below through a vertical inlet duct (5), where the inlet duct (5) has an opening (12) covered by a roof structure (13), where the horizontal projection of the roof structure (13) is larger than the horizontal projection of the inlet opening (12) with the result that the absorption solution cannot drop into the inlet opening (12), where the roof structure (13) is formed by a large number of lamellae (14) placed one on top of the other with spaces in between and where the roof structure (13) is closed by an auxiliary roof (19), **characterized in that** the lamellae (14) are curved in an arched shape in their initial section (16) or **in that** the lamellae (14) run upwards vertically in their initial section (16) and then curve in an arched shape in such a way as to enhance deflection of the gas.

2. Plant according to claim 1, **characterized in that** the lamellae (14) run on a downward slant towards the wall (10) of the absorption chamber (3) in such a way that the gas flowing in vertically is deflected downwards on a slant and can be fed to the absorption chamber (3) through the ducts (15) formed between the lamellae (14).

3. Plant according to claim 2, **characterized in that** the angle α between the lamellae (14) and the vertical is between 50° and 70°, preferably 60°.

4. Plant according to claim 2 or 3, **characterized in that** the length (y) of the ducts (15) between two lamellae (14) is greater than the spacing (x) between the lamellae (14) forming the ducts (15).

5. Plant according to one of claims 1 to 4, **characterized in that** the pitch (β) of the roof side in relation to a vertical is between 140° and 170°, preferably 155°.

6. Plant according to one of claims 1 to 5, **characterized in that** the lamellae (14) form a pyramidal roof structure (13).

7. Plant according to one of claims 1 to 5, **characterized in that** the lamellae (14) form a conical roof structure (13).

8. Plant according to one of Claims 1 to 7, **characterized in that** a gas distribution level (7) is disposed above the roof structure (13) and generates the turbulence in the gas flow fed in.

## Revendications

1. Installation (1) d'absorption de différents composants tels que des polluants ou des substances valorisables dans des gaz, dans laquelle une solution d'absorption est mise en contact avec le gaz dans une chambre d'absorption (3), la solution d'absorption étant introduite par des buses de pulvérisation (20) d'un niveau de pulvérisation (4) dans la chambre d'absorption (3) et le gaz pouvant être acheminé par un canal d'entrée vertical (5) depuis le dessous dans la chambre d'absorption (3), le canal d'entrée (5) comportant un orifice (12), qui est recouvert d'un lanterneau (13), le plan du lanterneau (13) étant supérieur à celui de l'orifice d'admission (12) de manière à rendre impossible l'introduction de la solution d'absorption dans l'orifice d'admission (12), le lanterneau (13) étant composé d'une pluralité de lamelles (14) espacées les unes des autres et superposées les unes sur les autres, le lanterneau (13) étant fermé par un toit auxiliaire (19), **caractérisée en ce que** les lamelles (14) dans leur zone de commencement (16) sont arquées, ou **en ce que** les lamelles (14) dans leur zone de commencement (16) partent à la verticale vers le haut et ensuite sont arquées, aidant ainsi à faire dévier les gaz.

2. Installation selon la revendication 1, **caractérisée en ce que** les lamelles (14) partent obliquement vers le bas vers la paroi de contenant (10) de la chambre d'absorption (3) de manière à ce que le gaz affluant verticalement soit dévié obliquement vers le bas, et puisse être acheminé par les canaux (15) formés entre les lamelles vers la chambre d'absorption (3).

3. Installation selon la revendication 2, **caractérisée en ce que** l'angle α entre les lamelles (14) et les verticales est compris entre 50° et 70°, de préférence est égal à 60°.

4. Installation selon la revendication 2 ou la revendication 3, **caractérisée en ce que** la longueur (y) des canaux (15) entre deux lamelles (14) est supérieure à la distance (x) entre les lamelles (14) formant les canaux (15).

5. Installation selon l'une des revendications 1 à 4, **caractérisée en ce que** la pente (β) du bord de toit par rapport à une verticale est comprise entre 140° et 170°, de préférence est égale à 155°.

6. Installation selon l'une des revendications 1 à 5, **caractérisée en ce que** les lamelles (14) forment un lanterneau (13) pyramidal.

7. Installation selon l'une des revendications 1 à 5, **caractérisée en ce que** les lamelles (14) forment un lanterneau conique (13).

8. Installation selon l'une des revendications 1 à 7, **caractérisée en ce qu'**au-dessus du lanterneau (13) est disposé un niveau de répartition de gaz (7) qui permet de générer des turbulences dans le flux de gaz acheminé.
